# EUROPÄISCHE PATENTANMELDUNG

(11) **EP 3 311 955 A1**
(43) Veröffentlichungstag der Anmeldung: **25.04.2018**
(21) Anmeldenummer: 16195203.1
(22) Anmeldetag: 24.10.2016
(51) Int. Cl.: B25B 5/10, B25B 5/14, B25B 11/02, B25B 27/00, B66C 23/48, F16D 55/00

(54) **MONTAGEWERKZEUG FÜR EINEN BREMSSATTEL**

(71) Anmelder: Nestler, Jens, 8753 Fohnsdorf (AT)
(72) Erfinder: Nestler, Jens, 8753 Fohnsdorf (AT)
(74) Vertreter: Wirnsberger, Gernot

(57) **Zusammenfassung**

Die Erfindung betrifft ein Montagewerkzeug (1) für einen Bremssattel (6), aufweisend zwei bewegbar verbundene Arme, mit welchen ein Bremssattel (6) eines Kraftfahrzeuges anhebbar ist. Um ein ergonomisch günstiges Anheben eines Bremssattels (6) bei gleichzeitig einfachem Aufbau zu ermöglichen, ist erfindungsgemäß vorgesehen, dass eine die Arme verbindende Spindel (3) vorgesehen ist, wobei ein Winkel (α), welchen die Arme einschließen, mittels der Spindel (3) veränderbar ist.

## Beschreibung

Die Erfindung betrifft ein Montagewerkzeug für einen Bremssattel, aufweisend zwei bewegbar verbundene Arme, mit welchen ein Bremssattel eines Kraftfahrzeuges anhebbar ist.

Aus dem Stand der Technik sind verschiedene Montagewerkzeuge für Bremssättel bekannt geworden. Dabei wird der Bremssattel eines Kraftfahrzeuges, insbesondere eines LKWs oder Busses zunächst mit dem Montagewerkzeuge verbunden, um anschließend das Montagewerkzeug samt Bremssattel anzuheben, beispielsweise um den Bremssattel zu überholen oder zu tauschen.

Nachteilig bei Montagewerkzeugen des Standes der Technik ist, dass diese umständlich in einer Handhabung und kompliziert in einem Aufbau sind.

Hier setzt die Erfindung an. Aufgabe der Erfindung ist es, ein Montagewerkzeug der eingangs genannten Art anzugeben, mit welchem ein Montieren bzw. Demontieren eines Bremssattels auf besonders einfache Weise möglich ist. Ferner soll das Montagewerkzeug einfach und robust für eine Anwendung in einer KFZ-Werkstätte ausgebildet sein.

Diese Aufgabe wird gelöst durch ein Montagewerkzeug der eingangs genannten Art, bei welchem eine die Arme verbindende Spindel vorgesehen ist, wobei ein Winkel, welchen die Arme einschließen, mittels der Spindel veränderbar ist.

Im Rahmen der Erfindung wurde erkannt, dass ein einfach aufgebautes und gleichzeitig robustes Montagewerkzeug erreicht werden kann, wenn zwei Arme des Montagewerkzeuges für einen Eingriff in eine Öffnung eines Bremssattels ausgebildet sind und ein Winkel, welchen die Arme einschließen, mittels einer Spindel veränderbar ist.

Die Spindel ist üblicherweise selbsthemmend ausgebildet, sodass ein zusätzliches Fixieren der Arme in einer Position, in welcher das Montagewerkzeug formschlüssig mit dem Bremssattel verbunden ist, nicht erforderlich ist. In der Regel werden die Arme somit bei einer Montage bzw. Demontage eines Bremssattels in eine Öffnung des Bremssattels bewegt, wonach die Arme gespreizt werden bzw. ein Winkel, welchen die Arme einschließen, mittels der Spindel erhöht wird, bis die Arme an einer Begrenzung der Öffnung des Bremssattels anliegen, sodass der Bremssattel formschlüssig mit den Armen bzw. dem Montagewerkzeug verbunden ist. Anschließend kann der Bremssattel mittels des Montagewerkzeuges angehoben und beispielsweise verfahren werden.

Es hat sich bewährt, dass an jedem Arm ein Muttergehäuse drehbar angeordnet ist und die Spindel mit den Armen über die Muttergehäuse verbunden ist. Dadurch wird ein besonders einfacher und robuster Aufbau erreicht. Um einen geringen Bauarm des Montagewerkzeuges zu erreichen, kann vorgesehen sein, dass die Spindel durch Langlöcher in den Armen geführt ist.

Beschädigungen des Montagewerkzeuges sowie eines mit diesem transportierten Bremssattels durch ruckartige bzw. schnelle Bewegungen können auf einfache Weise vermieden werden, wenn parallel zur Spindel ein Dämpfer vorgesehen ist, welcher die Arme verbindet.

Um eine einfache Handhabbarkeit des Montagewerkzeuges in einer KFZ-Werkstätte zu erreichen, ist es günstig, wenn die Spindel zur formschlüssigen Verbindung mit einer Schraubmaschine, insbesondere einem Druckluft-Schlagschrauber, ausgebildet ist. Das Montagewerkzeug kann dann einfach mittels einer üblicherweise in einer KFZ-Werkstätte vorgesehenen Schlagschraubmaschine betätigt werden.

Es hat sich bewährt, dass das Montagewerkzeug zur formschlüssigen Verbindung mit einer Hebeeinrichtung, insbesondere in einem Bereich eines ersten Endes der Arme, ausgebildet ist, wobei mittels der Hebeeinrichtung ein durch das Montagewerkzeug gehaltener Bremssattel eines Kraftfahrzeuges anhebbar ist. Somit können die Arme an einem ersten Ende mit einer Hebeeinrichtung verbunden sein und an einem zweiten Ende formschlüssig mit dem Bremssattel verbunden werden. Hierzu kann beispielsweise endseitig in einem Bereich des ersten Endes der Arme eine Bohrung für einen Bolzen oder dergleichen vorgesehen sein, welche mit der Hebeeinrichtung verbindbar ist. Durch den Bolzen wird dann auch eine bewegbare Verbindung der beiden Arme erreicht.

Die Spindel ist üblicherweise an einem vom ersten Ende beabstandeten Bereich mit den Armen verbunden, sodass durch ein Betätigen der Spindel ein Abstand zwischen den Armen in jenem Bereich verändert wird, in welchem die Spindel mit den Armen verbunden ist. Wenn ein Abstand der Arme an einer anderen Position, beispielsweise in einem Bereich des ersten Endes mittels eines Bolzens, vorgegeben ist, führt somit eine Betätigung der Spindel zu einer Änderung eines von den Armen eingeschlossenen Winkels. Alternativ zu einem Bolzen können die Arme hierzu natürlich auch mittels eines Scharniers oder dergleichen an einer von einem Angriffspunkt der Spindel beabstandeten Bereich verbunden sein.

Es hat sich als günstig erwiesen, dass die Arme außenseitig jeweils einen Anschlag aufweisen, vorzugsweise in einem Bereich eines zweiten Endes. Das Montagewerkzeug kann dann auf besonders einfache Weise betätigt werden, indem die Arme in eine Öffnung des Bremssattels eingeführt werden, bis die an den Armen angeordneten Anschläge am Bremssattel anliegen. Werden die Anschläge mit gleichem Abstand von einem zweiten Ende der Arme positioniert, ist dadurch ein symmetrisches Anbringen des Montagewerkzeuges am Bremssattel sichergestellt. Darüber hinaus wird durch die Anschläge auch eine Betätigung des Werkzeuges erleichtert, weil bei einem Einführen der Arme in die Öffnung bis zu den Anschlägen sichergestellt ist, dass die Arme weit genug in die Öffnung ragen, um eine stabile formschlüssige Verbindung zu gewährleisten.

Günstig ist es, wenn ein erfindungsgemäßes Montagewerkzeug bei einem Set aus einer Hebeeinrichtung, welche zum Anheben eines Bremssattels eines Kraftfahrzeuges ausgebildet ist, und einem Montagewerkzeug eingesetzt wird.

Ein Bremssattel kann dann auf einfache Weise sowie mit geringem Kraftaufwand mittels der Hebeeinrichtung angehoben bzw. montiert oder demontiert werden.

Mit Vorteil ist das Montagewerkzeug mit der Hebeeinrichtung über ein Verbindungsmittel verbunden, welches die Arme in einem Bereich eines ersten Endes verbindet. Bei einer besonders einfachen Ausführung werden die Arme in einem Bereich des ersten Endes durch einen in Bohrungen der Armen geführten Bolzen oder Karabiner verbunden, welcher mit der Hebeeinrichtung verbunden ist. Eine bewegbare Verbindung der beiden Arme wird dabei auf einfache Weise erreicht, wenn die Bohrungen in den Armen einen größeren Durchmesser als der Bolzen oder der Karabiner aufweisen.

Üblicherweise ist die Hebeeinrichtung verfahrbar ausgebildet. Hierzu können beispielsweise bodenseitig Rollen vorgesehen sein, um einen mittels des Montagewerkzeuges aufgenommen Bremssattel in einer Werkstätte verfahren zu können.

Darüber hinaus ist es günstig, wenn bei einem entsprechenden Set auch ein Haken vorgesehen ist, welcher mit der Hebeeinrichtung verbindbar ist und mit welchem ein Bremssattel eines Kraftfahrzeuges anhebbar ist. Der Haken kann dadurch alternativ zum Montagewerkzeug mit der Hebeeinrichtung verbunden werden. Somit können auch stehend montierte Bremssättel auf besonders einfache Weise angehoben und montiert bzw. demontiert werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 und 2 ein erfindungsgemäßes Montagewerkzeug in unterschiedlichen Ansichten;
Fig. 3 ein Set aus einer Hebeeinrichtung und einem erfindungsgemäßen Montagewerkzeug;
Fig. 4 und 5 einen Haken eines erfindungsgemäßen Sets.

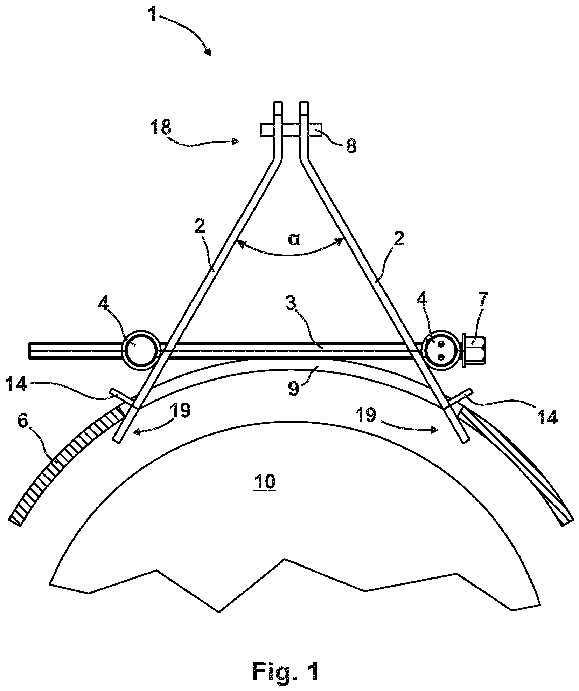

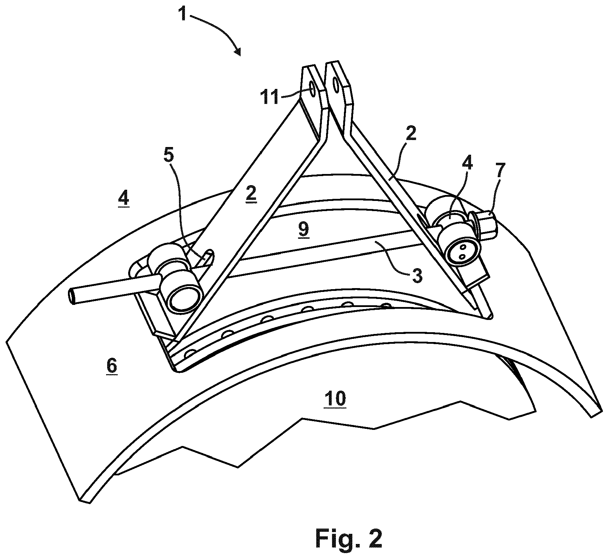

Fig. 1 und 2 zeigen ein erfindungsgemäßes Montagewerkzeug 1 samt einem Bremssattel 6 und einem Teil einer Bremsscheibe 10 eines Busses. Das Montagewerkzeug 1 weist zwei an einem ersten Ende 18 üblicherweise mittels eines Bolzens 8 oder dergleichen verbundene Arme 2 auf. Um einen Winkel α, welchen die Arme 2 einschließen, zu verändern, ist eine Spindel 3 vorgesehen. Die Spindel 3 ist über drehbar mit den Armen 2 verbundene Muttergehäuse 4 mit den Armen 2 verbunden.

Die Spindel 3 kann über eine endseitige Verbindungsmutter 7 mit einem Schlagschrauber verbunden werden, sodass das Montagewerkzeug 1 beispielsweise mit einem in Werkstätten vorhandenen Schlagschrauber betätigt werden kann. In einem Bereich eines zweiten Endes 19 der Arme 2 sind außenseitige Anschläge 14 vorgesehen. Mittels der Anschläge 14 ist ein symmetrisches Positionieren des Montagewerkzeuges 1 in einer Öffnung 9 eines Bremssattels 6 auf einfache Weise möglich.

Um das Montagewerkzeug 1 mit einem Bremssattel 6 zu verbinden, werden die Arme 2 in eine kopfseitige Öffnung 9 des Bremssattels 6 eingeführt, wonach die Spindel 3 betätigt wird, bis die Arme 2 sowie die Anschläge 14 an den Armen 2 an einer Begrenzung der Öffnung 9 anliegen. Der Bremssattel 6 ist dann formschlüssig mit dem Montagewerkzeug 1 verbunden. Um den Bremssattel 6 samt Montagewerkzeug 1 anschließend anzuheben, ist ein durch eine Bohrung 11 in einem Bereich des ersten Endes 18 der Arme 2 geführter Bolzen 8 üblicherweise mit einer Hebeeinrichtung 12 oder dergleichen verbunden. Der Bremssattel 6 samt Montagewerkzeug 1 wird somit über die Bohrungen 11 angehoben und kann anschließend beispielsweise mit der Hebeeinrichtung 12 verfahren werden.

Parallel zur Spindel 3 kann ein die Arme 2 ebenfalls verbindender Dämpfer vorgesehen sein. Das in Fig. 1 dargestellte Ausführungsbeispiel weist jedoch keinen Dämpfer auf.

In Fig. 2 ist das Montagewerkzeug 1 ohne Bolzen 8 dargestellt, sodass die Bohrungen 11 für den Bolzen 8 im Bereich des ersten Endes 18 der Arme 2 ersichtlich sind.

Wie weiter in Fig. 2 ersichtlich ist die Spindel 3 durch Langlöcher 5 in den Armen 2 geführt. Dies ermöglicht eine sehr robuste und gleichzeitig leichtgewichtige und einfache Ausbildung des Montagewerkzeuges 1.

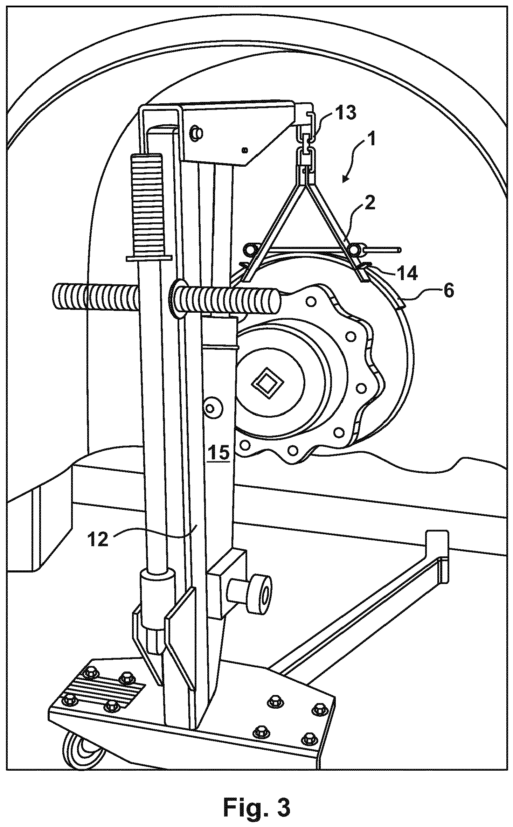

Fig. 3 zeigt ein Set aus einer Hebeeinrichtung 12 und einem erfindungsgemäßen Montagewerkzeug 1 vor einem Bremssattel 6 eines Busses. Wie ersichtlich ist dabei ein mit den Bohrungen 11 der Arme 2 einerseits und der Hebeeinrichtung 12 andererseits verbundenes Verbindungsmittel 13 vorgesehen, über welches der Bremssattel 6 mittels des Montagewerkzeuges 1 angehoben werden kann. Die Hebeeinrichtung 12 weist dabei einen Hydraulikzylinder 15 auf, sodass auch ein Bremssattel 6 eines Nutzfahrzeuges wie eines Busses mit geringem Kraftaufwand für einen Monteur angehoben werden kann. Ferner ist die Hebeeinrichtung 12 mit bodenseitigen Rollelementen versehen, um einen angehobenen Bremssattel 6 einfach verfahren zu können.

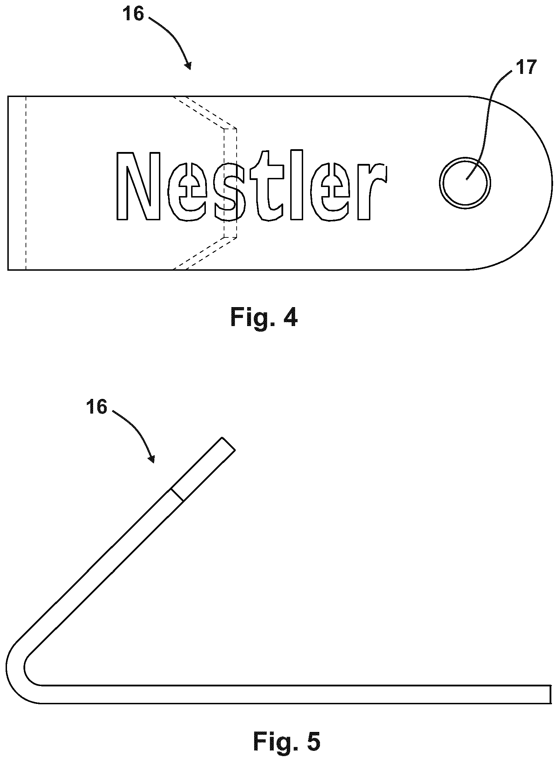

Fig. 4 zeigt einen Haken 16, welcher alternativ zum Montagewerkzeug 1 mit der Hebeeinrichtung 12 über ein Verbindungsmittel 13 verbunden werden kann. Hierzu weist der Haken 16 eine Hakenbohrung 17 auf. Dadurch können mit einem erfindungsgemäßen Set auch stehend bzw. seitlich angeordnete Bremssättel mit geringem Kraftaufwand angehoben werden.

Mit einem erfindungsgemäßen Montagewerkzeug 1 ist ein Montieren bzw. Demontieren eines Bremssattels 6 eines Kraftfahrzeuges, insbesondere eines Lastkraftwagens oder eines Busses, auf besonders einfache und ergonomisch vorteilhafte Weise möglich. Weil das Montagewerkzeug 1 mittels eines üblicherweise in Werkstätten verfügbaren Schlagschraubers betätigt werden kann, kann das Montagewerkzeug 1 ohne eigenen Antrieb für ein Öffnen der Arme 2 ausgebildet sein und daher selbst auch sehr einfach und kostengünstig hergestellt werden.

## Patentansprüche

1. Montagewerkzeug (1) für einen Bremssattel (6), aufweisend zwei bewegbar verbundene Arme (2), mit welchen ein Bremssattel (6) eines Kraftfahrzeuges anhebbar ist, **dadurch gekennzeichnet, dass** eine die Arme (2) verbindende Spindel (3) vorgesehen ist, wobei ein Winkel (α), welchen die Arme (2) einschließen, mittels der Spindel (3) veränderbar ist.

2. Montagewerkzeug (1) nach Anspruch 1, **dadurch gekennzeichnet, dass** an jedem Arm (2) ein Muttergehäuse (4) drehbar angeordnet ist und die Spindel (3) mit den Armen (2) über die Muttergehäuse (4) verbunden ist.

3. Montagewerkzeug (1) nach Anspruch 1 oder 2, **dadurch gekennzeichnet, dass** parallel zur Spindel (3) ein Dämpfer vorgesehen ist, welcher die Arme (2) verbindet.

4. Montagewerkzeug (1) nach einem der Ansprüche 1 bis 3, **dadurch gekennzeichnet, dass** die Spindel (3) zur formschlüssigen Verbindung mit einer Schraubmaschine, insbesondere einem Druckluft-Schlagschrauber, ausgebildet ist.

5. Montagewerkzeug (1) nach einem der Ansprüche 1 bis 4, **dadurch gekennzeichnet, dass** das Montagewerkzeug (1) zur formschlüssigen Verbindung mit einer Hebeeinrichtung (12), insbesondere in einem Bereich eines ersten Endes (18) der Arme (2), ausgebildet ist, wobei mittels der Hebeeinrichtung (12) ein durch das Montagewerkzeug (1) gehaltener Bremssattel (6) eines Kraftfahrzeuges anhebbar ist.

6. Montagewerkzeug (1) nach einem der Ansprüche 1 bis 5, **dadurch gekennzeichnet, dass** die Arme (2) außenseitig jeweils einen Anschlag (14) aufweisen, vorzugsweise in einem Bereich eines zweiten Endes (19).

7. Set aus einer Hebeeinrichtung (12), welche zum Anheben eines Bremssattels (6) eines Kraftfahrzeuges ausgebildet ist, und einem Montagewerkzeug (1) nach einem der Ansprüche 1 bis 6.

8. Set nach Anspruch 7, **dadurch gekennzeichnet, dass** das Montagewerkzeug (1) mit der Hebeeinrichtung (12) über ein Verbindungsmittel (13) verbunden ist, welches die Arme (2) in einem Bereich eines ersten Endes (18) verbindet.

9. Set nach Anspruch 7 oder 8, **dadurch gekennzeichnet, dass** die Hebeeinrichtung (12) verfahrbar ausgebildet ist.

10. Set nach einem der Ansprüche 7 bis 9, **dadurch gekennzeichnet, dass** ein Haken (16) vorgesehen ist, welcher mit der Hebeeinrichtung (12) verbindbar ist und mit welchem ein Bremssattel (6) eines Kraftfahrzeuges anhebbar ist.
